Europäisches Patentamt

European Patent Office

Office européen des brevets

(11) Veröffentlichungsnummer: **0 054 120**
**A1**

## (12) EUROPÄISCHE PATENTANMELDUNG

(21) Anmeldenummer: **81108251.0**

(22) Anmeldetag: **13.10.81**

(51) Int. Cl.³: **H 04 J 3/16**
H 04 Q 11/04, H 04 M 11/06
H 04 N 7/00, H 04 B 9/00

(30) Priorität: **13.12.80 DE 3047045**

(43) Veröffentlichungstag der Anmeldung:
**23.06.82 Patentblatt 82/25**

(84) Benannte Vertragsstaaten:
**AT CH DE FR GB LI NL SE**

(71) Anmelder: **Licentia Patent-Verwaltungs-GmbH**
**Theodor-Stern-Kai 1**
**D-6000 Frankfurt/Main 70(DE)**

(72) Erfinder: **Koeck, Klaus, Dipl.-Ing.**
**Dunantstrasse 2**
**D-7150 Backnang(DE)**

(74) Vertreter: **Schickle, Gerhard, Dipl.-Ing.**
**Licentia Patent-Verwaltungs-GmbH Theodor-Stern-Kai**
**1**
**D-6000 Frankfurt/Main 70(DE)**

(54) Dienstintegriertes Übertragungssystem.

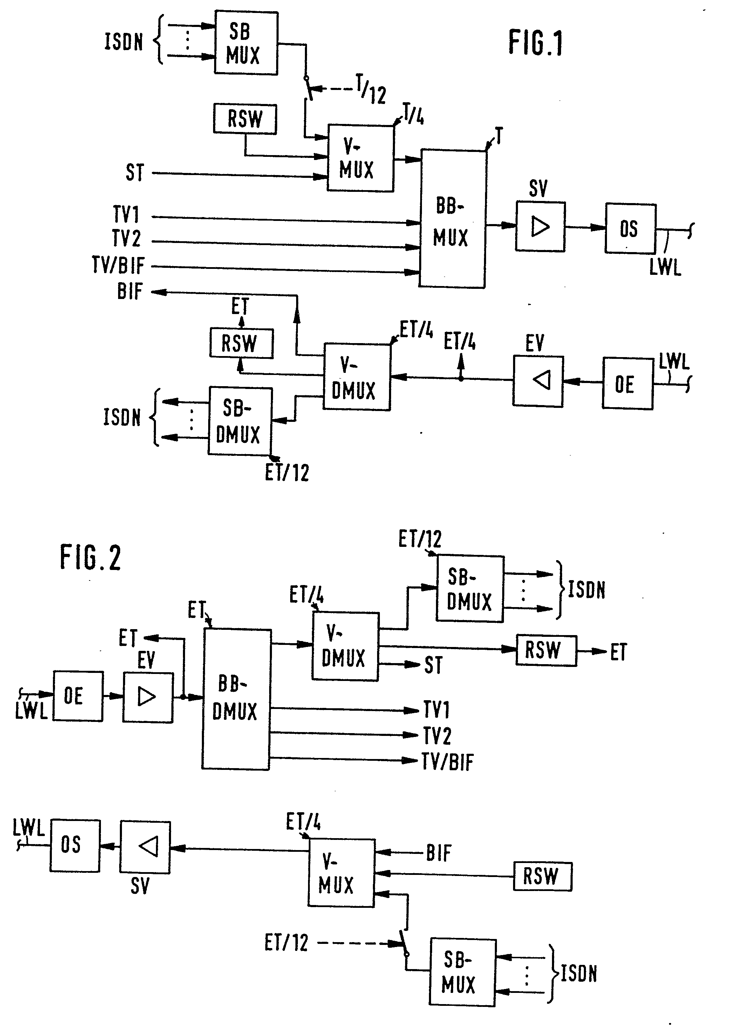

(57) Die Erfindung betrifft ein dienstintegriertes im Zeitmultiplex arbeitendes System mit Einrichtungen zur Übertragung von Signalen unterschiedlicher Informationsrate zwischen einem Teilnehmer und einer Zentrale, wobei die Signale sendeseitig durch Multiplexer zusammengefasst und empfangsseitig durch Demultiplexer zurückgewonnen werden und ist dadurch gekennzeichnet, dass die Frequenz des Zeitmultiplexerahmens (im weiteren Verlauf Rahmenfrequenz bzw. Rahmen genannt) gleich der kleinsten Informationsrate der zu übertragenden Signale gewählt und dass je Rahmen eine Informationseinheit des Signals mit der kleinsten Informationsrate übertragen wird (Figur 1).

FIG.1

EP 0 054 120 A1

0054120

- 1 -

Licentia Patent-Verwaltungs-GmbH          NE2-BK/Ruf/be
Theodor-Stern-Kai 1                        BK 80/121
D-6000  Frankfurt 70


## Dienstintegriertes Übertragungssystem


Die Erfindung betrifft ein dienstintegriertes Übertragungssystem gemäß Oberbegriff des Patentanspruchs 1.

Ein solches System ist bekanntgeworden durch die deutsche
Offenlegungsschrift 22 62 933, die ein Verfahren zur Übertragung verschiedenartiger Nachrichtensignale in einem Zeitmultiplexübertragungssystem beschreibt, wobei der Zeitmultiplexrahmen in m Unterrahmen und jeder Unterrahmen in z
Zeitschlitze unterteilt werden, und die Belegung des Zeitmultiplexrahmens durch Signale so erfolgt, daß zunächst
jeweils der i-te Zeitschlitz der Unterrahmen belegt wird
und erst, wenn in allen Unterrahmen eines Zeitmultiplexrahmens der i-te Zeitschlitz belegt ist, ein benachbarter
Zeitschlitz der Unterrahmen zusätzlich belegt wird.

Durch dieses Verfahren der Zeitplatzzuweisung erfolgt eine
flexible Anpassung an den Verkehr, es ist jedoch auch ein
relativ hoher Steuerungsaufwand notwendig.

Aufgabe der vorliegenden Erfindung ist es daher, ein Übertragungssystem der obigen Art anzugeben, das eine Zusammenfassung von Signalen unterschiedlicher Informationsrate mittels Multiplexer auf der Sendeseite und eine entsprechende Rückgewinnung derselben durch Demultiplexer auf der Empfangsseite jeweils mit weitgehend unaufwendigen Mitteln gestattet.

Die Lösung erfolgt mit den in den Patentansprüchen angegebenen Mitteln.

Durch das erfindungsgemäße System ergeben sich die Vorteile, daß die Multiplex- bzw. Demultiplexbildung aufgrund einer optimalen Rahmenfrequenz und dadurch, daß pro Rahmen eine Informationseinheit des schmalbandigsten Signals übertragen wird, in weitgehend unaufwendiger Weise erfolgen kann. In einer Ausgestaltung der Erfindung wird eine vorteilhafte Rahmenstruktur angegeben, wobei die Informationseinheiten der schmalbandigen Signale im Rahmenkopf Platz finden. Durch weitere Ausgestaltungen ist es möglich, auch interne langsame Meldesignale wie Alarme, Meldungen über Stopfbildung usw. zu übertragen. Für den Normalfall, daß teilnehmerseitig die Sendedatenströme wesentlich geringer sind als die Empfangsdatenströme, wird eine weitere vorteilhafte Senderahmenstruktur des Teilnehmers angegeben, wodurch eine Einsparung an aufwendigen Mitteln ermöglicht wird. In einer weiteren Ausgestaltung der Erfindung werden die schmalbandigen Signale mit einer Subharmonischen der Taktfrequenz der Multiplexer abgetastet, wodurch zusätzlicher Abtast- und Synchronisationsaufwand vermieden werden kann. Große Einsparungen an Aufwand ergeben sich bei einem erfindugsgemäßen digitalen Übertragungssystem, wenn die Bittaktfrequenzen der zu übertragenden Signale Harmonische oder Subharmonische sind.

Es folgt die Beschreibung des erfindungsgemäßen Übertragungssystems anhand der Figuren, die Ausführungsbeispiele darstellen.

Die Figuren 1 und 4 bzw. 2 und 5 zeigen die vermittlungsseitigen bzw. teilnehmerseitigen Übertragungseinrichtungen zweier digitaler Übertragungssysteme für Schmal- und Breitbandkanäle, die über Multiplexer zusammengefaßt, über ein Lichtwellenleitersystem übertragen und auf der Empfangsseite durch Demultiplexer zurückgewonnen werden.

Die Figuren 3a und 3b stellen die teilnehmerseitige Rahmenstruktur des Systems nach Figuren 4 und 5 dar.

In den vermittlungsseitigen Einrichtungen der Figur 1 ist eine sendeseitige Zusammenfassung der Schmalbandsignale ISDN mittels Schmalbandmultiplexer SBMUX erkennbar. In einer zweiten Multiplexer-Stufe werden das Schmalbandmultiplexsignal, ein Rahmensynchronwort RSW und eine Anzahl Stereo-Rundfunkkanäle ST mittels Vormultiplexer VMUX zu einem Vormultiplexsignal zusammengefaßt, welches wiederum in einer dritten und letzten Stufe, zusammen mit drei Breitbandsignalen wie Fernsehen und/oder Bildfernsprechen, mittels Breitbandmultiplexer BBMUX gemultiplext und über einen Sendeverstärker SV auf den optischen Sender OS eines Lichtwellenleitersystems LWL gegeben wird.

In Figur 2 oben sind die teilnehmerseitigen Empfangseinrichtungen für das eben beschriebene Multiplexsignal gezeichnet. Vom optischen Empfänger OE des Lichtwellenleitersystems LWL gelangen die Signale über einen Empfangsverstärker EV auf die dreistufige Demultiplexeinrichtung, wobei mittels Breitbanddemultiplexer BBDMUX der ersten Stufe die Breitbandsignale TV1, TV2, TV bzw. BIF und das Vormultiplexsignal, aus letzterem durch den Vordemultiplexer VDMUX die Stereo-Rundfunksignale ST, das Rahmensynchronwort RSW und das Schmalbandmultiplexsignal gewonnen werden, welch letzteres mittels Schmalbanddemultiplexer SBDMUX in der letzten Stufe in die einzelnen Schmalbandkanäle aufgeteilt wird.

Die teilnehmerseitigen Sendeeinrichtungen sind unten in Figur 2 dargestellt. Die Schmalbandkanäle ISDN werden mittels Schmalbandmultiplexer SBMUX zum Schmalbandmultiplexsignal zusammengefaßt, welches in der zweiten Stufe mittels Vormultiplexer VMUX zusammen mit dem Rahmensynchronwort RSW und Bildfernsprechen BIF zusammengefaßt und über den Sendeverstärker SV auf den optischen Sender OS des Lichtwellenleitersystems LWL gegeben wird.

In Figur 1 unten sind die zweistufigen Demultiplexeinrichtungen auf der Vermittlungsseite erkennbar. Das optische Empfangssignal wird im optischen Empfänger OE in elektrische Signale umgesetzt, die im Empfangsverstärker EV verstärkt und im Vordemultiplexer VDMUX in die Bildfernsprechsignale BIF, Rahmensynchronwort RWS und Schmalbandmultiplexsignal aufgeteilt werden, welch letzteres in der letzten Stufe mittels Schmalbanddemultiplexer SBDMUX in die einzelnen Schmalbandsignale ISDN zerlegt wird.

Der Vorteil dieser Multiplex- bzw. Demultiplexanordnung liegt darin, daß aus der Bittaktfrequenz T des Breitbandmultiplexers durch Bildung von Subharmonischen alle benötigten Taktfrequenzen in einfacher Weise gebildet werden können. So wird der Vormultiplexer durch $T/4$ und der Schmalbandmultiplexer durch $T/12$ getaktet.

In den teilnehmerseitigen Empfangseinrichtungen wird der schnelle Bittakt hinter dem Empfangsverstärker EV zurückgewonnen und nach Bildung der Subharmonischen in entsprechender Weise den Demultiplexern bzw. den Multiplexern zugeleitet.

Entsprechend wird auf der vermittlungsseitigen Empfangseinrichtung verfahren.

Eine solche Ausgestaltung der Erfindung ist dann vorteilhafterweise anwendbar, wenn die Bitrate der Stereotonkanäle kleiner als die der Fernsehkanäle ist.

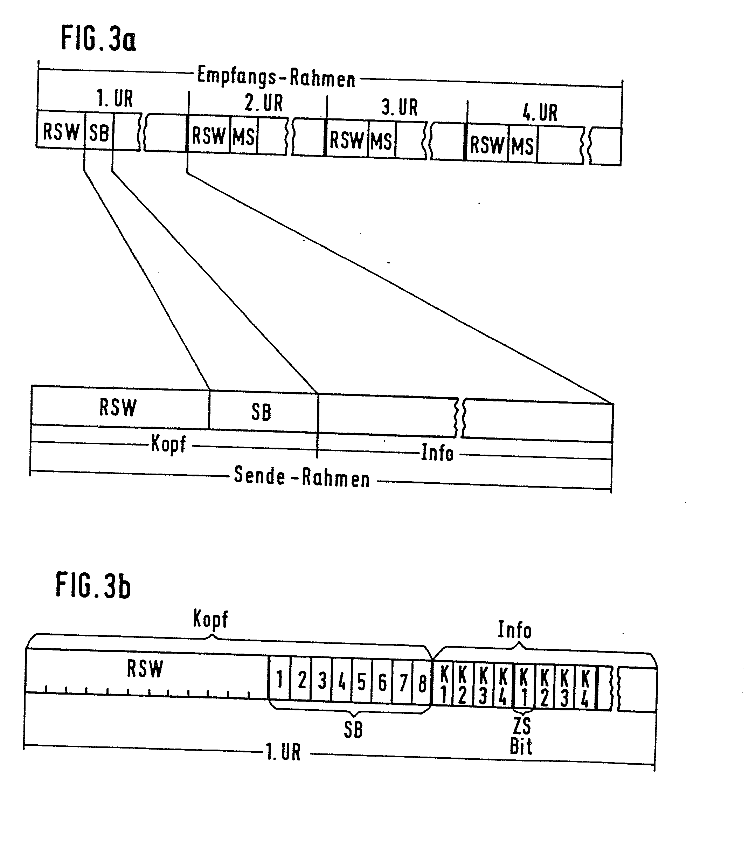

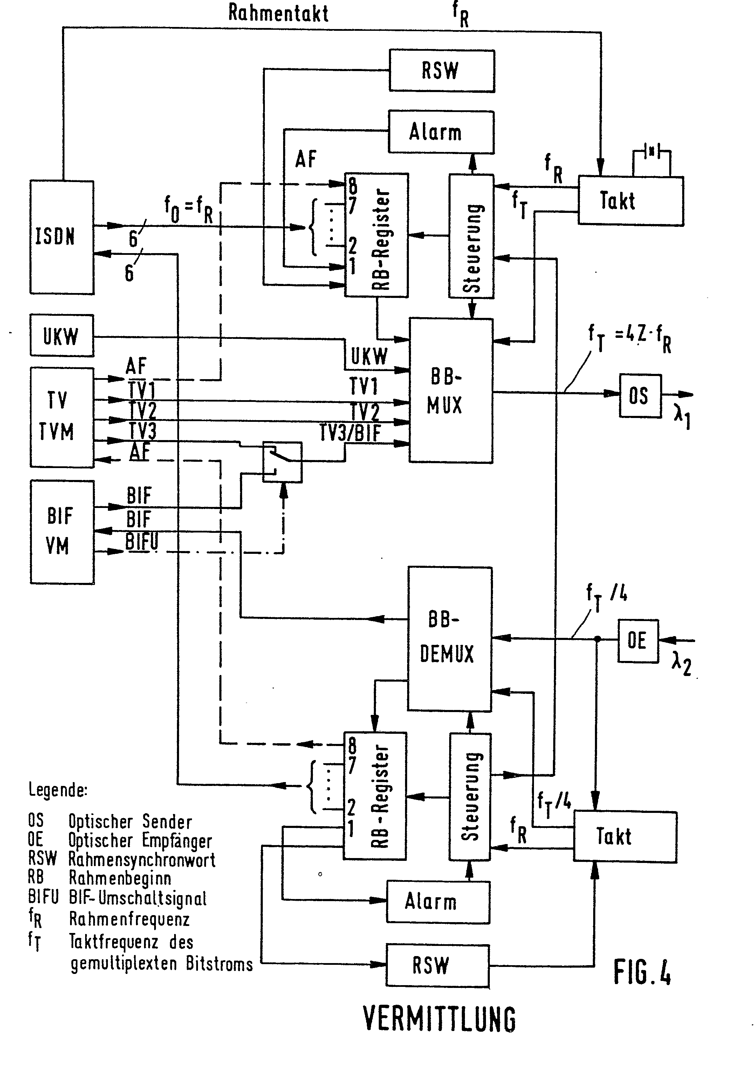

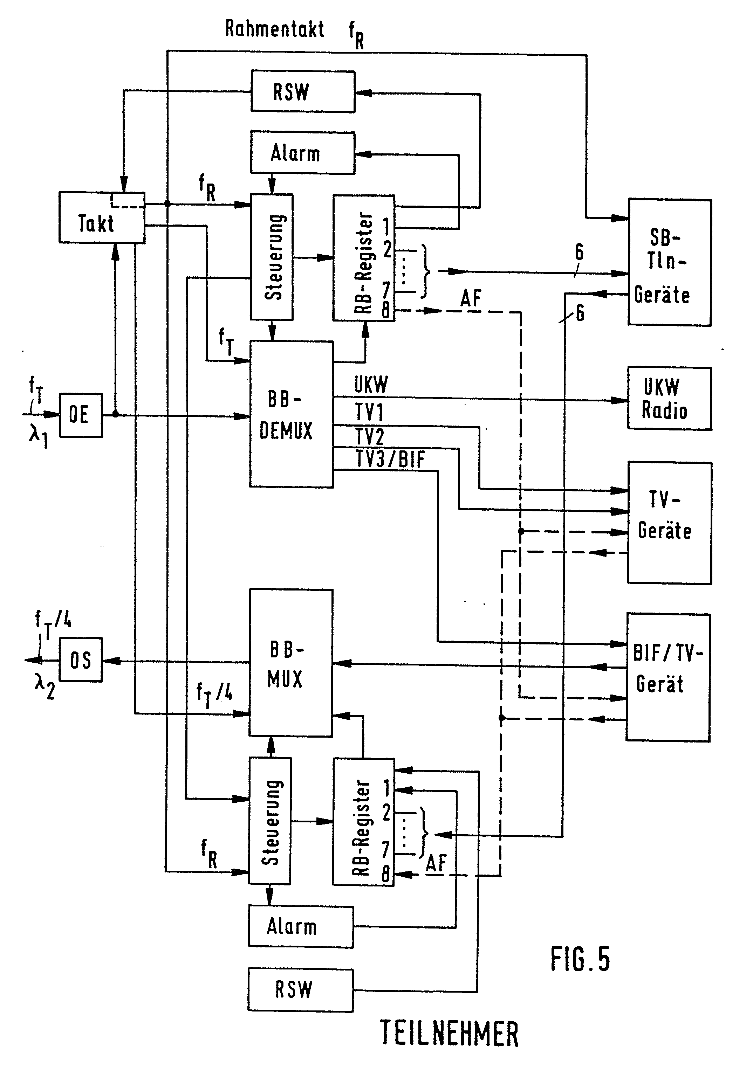

Sind die Bitraten der Stereotonkanäle und Fernsehkanäle gleich oder annähernd gleich, empfiehlt sich eine Multiplexbildung beispielsweise des Übertragungssystems der Figuren 4 und 5, dessen Rahmenstruktur in den Figuren 3a und 3b dargestellt ist.

Die Figuren 3a und 3b zeigen jeweils die teilnehmerseitigen Rahmenstrukturen, wobei

in Figur 3a   oben der Empfangsrahmen,
              unten der Senderahmen und
in Figur 3b   der erste Unterrahmen des Empfangsrahmens

dargestellt sind.

Der Empfangsrahmen ist in 4 Unterrahmen UR, der einzelne Unterrahmen wiederum in Kopf- und Informationsteil unterteilt. Erfindungsgemäß werden im Kopf das Rahmensynchronwort RSW und die Schmalbandsignale SB eingelagert. Beim gezeigten Ausführungsbeispiel besteht der Kopfteil aus insgesamt 20 Bit, wobei das Rahmensynchronwort 12 Bit umfaßt, so daß noch jeweils 1 Bit von bis zu 8 Schmalbandsignalen hinter dem Rahmensynchronwort Platz finden (Figur 3b). In dem Informationsteil, der beispielsweise aus 40 x 20 Bit besteht, werden die Breitbandkanäle K1 bis K4 bitweise verschachtelt eingelagert. In dem angenommenen Beispiel weisen die 8 Schmalbandkanäle jeweils gleiche Bitraten auf, die der Rahmenfrequenz entsprechen. Die für die Schmalbandübertragung vorgesehenen Plätze in den Kopfteilen der anderen Unterrahmen bleiben somit frei; sie können jedoch vorteilhafterweise mit Meldesignalen aller Art wie Alarmen, Informationen über die Stopfbildung usw. belegt werden. Erfindungsgemäß weist der Senderahmen der teilnehmerseitigen Einrichtungen genau die gleiche Rahmenfrequenz wie der Empfangsrahmen und die gleiche Struktur wie der erste Unterrahmen des Empfangsrahmens auf, wobei der Zeitschlitz des Senderahmens das 4fache eines Zeitschlitzes des Unterrahmens entsprechend der 4fach grösseren Empfangsbitrate beim Teilnehmer ist.

Dadurch, daß das Rahmensynchronwort in jedem Unterrahmen wiederholt wird, wird die Synchronisationszeit beim Teilnehmer verkürzt. Durch die gleiche Rahmen- bzw. Unterrahmenstruktur ergibt sich der Vorteil, daß für beide Übertragungseinrichtungen die gleichen Ablaufsteuerungen benutzt werden können, sie werden nur unterschiedlich schnell getaktet. Auch wird teilnehmerseitig nur eine einzige Taktaufbereitungsschaltung Takt benötigt.

In der Figur 4 ist die vermittlungsseitige, in Figur 5 die teilnehmerseitige Übertragungseinrichtung für das zweite Ausführungsbeispiel der Erfindung gezeichnet. Wie in Figuren 1 und 2 fällt die spiegelförmige Anordnung bei Figur 4 bzw. 5 und der mehrmalige Einsatz von gleichartigen Baugruppen wie Rahmensynchronwortspeicher bzw. -auswertung RSW, Rahmenbeginnregister RBR, Alarm- bzw. Meldebaugrupe, Steuerung und Taktbaugruppe Takt auf.

Die Verwendung gleichartiger Baugruppen ist im Ortsvermittlungsbereich von sehr großer wirtschaftlicher Bedeutung, da der Grad der Hochintegration eine Funktion der Stückzahl ist.

Die Schmalbandsignale ISDN werden nach Figuren 4 und 5 im Rahmenbeginnregister RBR mit dem ISDN-Bittakt f0, der identisch mit dem Rahmentakt fR ist, zusammen mit dem Rahmensynchronwort RSW, einen Melde/Alarmkanal und dem Fernsehanfor-

0054120
BK 80/121

derungskanal AF bereitgestellt. Bei Rahmenbeginn wird das Rahmenbeginnregister mit dem schnellen Bittakt fT ausgelesen. Nach dem Rahmenkopf werden vermittlungsseitig die 4 Breitbandkanäle UKW, TV1 bis TV 3 bitweise verschachtelt übertragen.

Die Breitbandkanäle haben die gleiche Bitrate, welche je nach Redundanzreduktionsfaktor der in zukünftigen integrierten Ortsnetzen übermittelten Fernseh- bzw. Bildfernsprechsignale etwa 30 bis 140 MBit/sec betragen. Der 4. Breitbandkanal kann wahlweise mit Fernsehen oder Bildfernsprechen belegt werden. Selbstverständlich sind auch andere Alternativen wie drei Fernsehkanäle sowie einem Bündel von UKW-Kanälen, die mit Bildfernsprechen gemultiplext sind, denkbar.

Aus den teilnehmerseitigen Übertragungseinrichtungen der Figur 5 ist ersichtlich, wie empfangsseitig der Rahmenkopf in das Rahmenbeginnregister geladen wird, während die 4 Breitbandsignale an die Endgeräte weitergeleitet werden. Für die Erkennung des Rahmensynchronwortes steht eine Auswertezeit von 1/4 der Rahmendauer zur Verfügung. Durch die Taktversorgung wird aus dem Ausgangssignal des optischen Empfängers der schnelle Bittakt fT gewonnen und mittels Teilung durch den Faktor 4 bzw. 4z mit z Zeitschlitzen pro Unterrahmen die weiteren Arbeitstakte gewonnen.

- - - - - - - - - -

Licentia Patent-Verwaltungs-GmbH          NE2-BK/Ruf/be
Theodor-Stern-Kai 1                       BK 80/121
D-6000   Frankfurt 70


Patentansprüche


1. Dienstintegriertes im Zeitmultiplex arbeitendes System
   mit Einrichtungen zur Übertragung von Signalen unterschiedlicher Informationsrate zwischen einem Teilnehmer
   und einer Zentrale, wobei die Signale sendeseitig durch
   Multiplexer zusammengefaßt und empfangsseitig durch Demultiplexer zurückgewonnen werden, dadurch gekennzeichnet, daß die Frequenz des Zeitmultiplexrahmens (im weiteren Verlauf Rahmenfrequenz bzw. Rahmen genannt)
   gleich der kleinsten Informationsrate der zu übertragenden Signale gewählt und daß je ein Rahmen eine Informationseinheit des Signals mit der kleinsten Informationsrate übertragen wird.

2. Dienstintegriertes Übertragungssystem mit Zweiwegübertragung nach Anspruch 1, dadurch gekennzeichnet, daß
   der teilnehmerseitige Empfangsrahmen N Unterrahmen enthält, daß die Unterrahmen jeweils einen Kopfteil und
   einen Informationsteil enthalten und daß im Kopfteil
   ein Rahmensynchronwort (RSW) und im Informationsteil

3. Dienstintegriertes Übertragungssystem nach Anspruch 2, dadurch gekennzeichnet, daß im Kopf des Unterrahmens Informationseinheiten der Signale mit der kleinsten Informationsrate übertragen werden.

4. Dienstintegriertes Übertragungssystem nach Anspruch 3, dadurch gekennzeichnet, daß die Signale mit der kleinsten Informationsrate neben Fernschreiben oder Fernsprechen interne Meldesignale sind.

5. Dienstintegriertes Übertragungssystem nach Anspruch 4, dadurch gekennzeichnet, daß die interne Meldesignale in den Unterrahmen 2 bis N übertragen werden.

6. Dienstintegriertes Übertragungssystem nach einem der Ansprüche 2 bis 5, dadurch gekennzeichnet, daß teilnehmerseitig die gesamte Informationsrate der Empfangssignale ein ganzzahliges Vielfaches N der Informationsrate der Sendesignale ist.

7. Dienstintegriertes Übertragungssystem nach einem der Ansprüche 2 bis 6, dadurch gekennzeichnet, daß teilnehmerseitig der Senderahmen die gleiche Anordnung aufweist wie der Unterrahmen des Empfangsrahmens.

8. Dienstintegriertes Übertragungssystem nach einem der Ansprüche 2 bis 7, dadurch gekennzeichnet, daß der Unterrahmen in z Zeitschlitze unterteilt ist, daß in den Zeitschlitzen jeweils eine Informationseinheit der Signale übertragen wird und daß aufeinanderfolgende Zeitschlitze jeweils verschiedenen Signalen zugeordnet sind.

9. Dienstintegriertes Übertragungssystem nach einem der vorhergehenden Ansprüche, dadurch gekennzeichnet, daß die Informationseinheit des Signals mit der kleinsten Informationsrate durch Abtasten mit einer Subharmonischen der Taktfrequenz der Multiplexer erzeugt wird.

10. Dienstintegriertes digitales Übertragungssystem nach Anspruch 2 und 9, dadurch gekennzeichnet, daß die zu übertragenden Signale die gleichen Bittaktfrequenzen bzw. deren Harmonische aufweisen.

0054120

1/4

FIG.1

FIG.2

## FIG.3a

Empfangs-Rahmen

| 1. UR | 2. UR | 3. UR | 4. UR |
|---|---|---|---|
| RSW SB | RSW MS | RSW MS | RSW MS |

| RSW | SB | | |
|---|---|---|---|

Kopf — Info

Sende-Rahmen

## FIG.3b

Kopf

Info

RSW  | 1 | 2 | 3 | 4 | 5 | 6 | 7 | 8 | K1 | K2 | K3 | K4 | K1 | K2 | K3 | K4 |

SB

ZS Bit

1. UR

0054120

FIG.4

VERMITTLUNG

Legende:

| | |
|---|---|
| OS | Optischer Sender |
| OE | Optischer Empfänger |
| RSW | Rahmensynchronwort |
| RB | Rahmenbeginn |
| BIFU | BIF-Umschaltsignal |
| $f_R$ | Rahmenfrequenz |
| $f_T$ | Taktfrequenz des gemultiplexten Bitstroms |

FIG.5

TEILNEHMER

0054120

Europäisches Patentamt

EUROPÄISCHER RECHERCHENBERICHT

Nummer der Anmeldung

EP 81 10 8251

| Kategorie | Kennzeichnung des Dokuments mit Angabe, soweit erforderlich, der maßgeblichen Teile | betrifft Anspruch |
|---|---|---|
| X | NTG-FACHBERICHTE, THE INTERNATIONAL SYMPOSIUM ON SUBSCRIBER LOOPS AND SERVICES, 15.-19. September 1980, Seiten 146-154 München, Berlin, DE. C.R. HARRIS et al.: "Local network evolution to meet future tele-communications needs" * Seite 147, linke Spalte, Zeilen 31-56; Figur 2 * | 1,4,10 |
| X | NTZ, Band 33, Heft 10, Oktober 1980, Seiten 646-652 Berlin, DE. H. BESIER: "Der Übergang zum digitalen Ortsnetz" * Seite 648, linke Spalte, Zeilen 19-46; Figur 2 * | 1,4,10 |
| A | TECHNISCHES MESSEN ATM, Band 43, Nr. 488, Heft 9, September 1976, Seiten 271-277 München, DE. H.P. GLOCKMANN: "Aufzeichnung und Übertragung von analogen Messdaten in PCM-Technik" * Figur 2 * | 1-3,9, 10 |
| A | DE - A - 2 538 638 (HEINRICH-HERTZ-INSTITUT) * Seite 5, Zeilen 1-16; Seite 6, Zeilen 14-17 * | 1,6,9, 10 |
| A | EP - A - 0 012 979 (SIEMENS) * Seite 4, Zeile 36 - Seite 5, Zeile 17; Figur 1 * | 8 |

### EINSCHLÄGIGE DOKUMENTE

KLASSIFIKATION DER ANMELDUNG (Int Cl.3)

H 04 J   3/16
H 04 Q  11/04
H 04 M  11/06
H 04 N   7/00
H 04 B   9/00

RECHERCHIERTE SACHGEBIETE (Int. Cl.3)

H 04 J   3/16
H 04 M  11/06
H 04 Q  11/04
H 04 B   9/00
H 04 N   7/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-02-1982 | MIKKELSEN |

EPA form 1503.1   06.78